# EUROPÄISCHE PATENTSCHRIFT

(11) **EP 1 970 581 B1**
(45) Veröffentlichungstag und Bekanntmachung des Hinweises auf die Patenterteilung: **02.01.2013**
(21) Anmeldenummer: 08004584.2
(22) Anmeldetag: 12.03.2008
(51) Int. Cl.: F16C 29/06, F16C 33/66

(54) **Linearwälzlager**
Linear roller bearing
Palier à roulement linéaire

(30) Priorität: 16.03.2007 DE 102007012650
(43) Veröffentlichungstag der Anmeldung: 17.09.2008
(73) Patentinhaber: AB SKF, 415 50 Göteborg (SE)
(72) Erfinder: Mayer, Uwe, 97702 Münnerstadt (DE); Stahl, Erwin, 97714 Rottershausen (DE); Velde, Henryk, 97440 Werneck (DE); Warsch, Thorsten, 97247 Untereisenheim (DE); Wiesenau, Doreen, 97525 Schwebheim (DE)
(74) Vertreter: Kohl, Thomas

(56) Entgegenhaltungen:
- EP-A1- 0 456 082
- EP-A2- 0 950 465
- EP-A2- 0 972 960
- EP-A2- 0 972 961
- DE-A1- 3 639 544

## Beschreibung

Die Erfindung betrifft ein Linearwälzlager.

Beispielsweise aus der DE 40 15 124 A 1 ist ein Kugellager für Längsbewegungen bekannt, das einen mit seiner Innenfläche eine Welle umgebenden Käfig besitzt. Der Käfig hat dabei axiale Führungsbahnen für belastete Kugeln und axiale Rückführbahnen für unbelastete Kugeln sowie jeweils einen Deckel an jedem seiner beiden Enden. Jeder Deckel hat Umlenkbahnen, die jeweils eine Führungsbahn mit einer Rückführbahn endseitig verbindet. An den beiden axialen Enden sind weiterhin Dichtungen in den Käfig eingesetzt. EP 0 972 960 A2 offenbart ein Linearwälzlager mit einerwelle mit Rillen und Schmierstoffspeicher mit Fortsätzen, die den Rillen entsprechend geformt sind.

Eine Aufgabe der Erfindung ist es, ein verbessertes Linearwälzlager zu schaffen.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Linearwälzlager folgende Merkmale:
- Zwei, über wenigstens eine Wälzkörperreihe gegeneinander längsverschieblichen Teile,
- eines der Teile umfasst ein hohlzylinderartiges Grundelement mit geradlinien Führungen für die belasteten und unbelasteten, zum endlosen Umlauf vorgesehene Wälzkörper,
- das andere der Teile ist eine durch die Höhlung des Grundelements hindurchgeführte Welle oder Achse, deren Außenmantel wenigstens im vom Grundelement umschlossenen Bereich einem Kreiszylindermantel entspricht, und
- ein Schmierstoffspeicher ist am Grundelement angeordnet und ist an der Umfangsposition, an der die Wälzkörperreihe zum Abrollen auf der Welle oder Achse vorgesehen ist, mit einem radial hin zur Welle oder Achse auskragenden, zum Berühren der Welle oder Achse vorgesehenen Fortsatz ausgebildet.

Dadurch, dass damit ausschließlich Bereiche geschmiert werden, auf denen die Wälzkörper abrollen, wird mit Vorteil die Gebrauchsdauer des einmal mit Schmierstoff gefüllten Schmierstoffspeichers deutlich erhöht, bis hin zu einer Lebensdauerschmierung.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: in perspektivischer Ansicht ein teilzusammengebautes, in Umfangsrichtung in sich geschlossenes, hohlzylinderartiges Linearkugellager,
- Figur 2: in perspektivischer Ansicht ein Umlenkelement des Linearkugellagers der Figur 1,
- Figur 3: in perspektivischer Ansicht einen Schmierstoffspeicher des Linearkugellagers der Figur 1,
- Figur 4: in perspektivischer Ansicht ein Deckelement für das Linearkugellager der Figur 1,
- Figur 5: einen ausschnittsweisen Längsschnitt durch eine zwischen einem Umlenk- und einem Deckelement angeordnete Dichtung,
- Figur 6: in perspektivischer Ansicht das zusammengebaute Linearkugellager der Figur 1,
- Figuren 7 und 8: in der Figur 6 mit A und B bezeichnete Ausschnittsvergrößerungen der Figur 6,
- Figur 9: in perspektivischer Ansicht ein in Umfangsrichtung unterbrochenes Linearkugellager,
- Figur 10: eine Frontansicht einer Dichtung für das Linearkugellager der Figur 9,
- Figur 11: einen Längsschnitt durch die Dichtung der Figur 10 und
- Figur 12: eine in der Figur 11 mit D bezeichnete Ausschnittsvergrößerung der Figur 11.

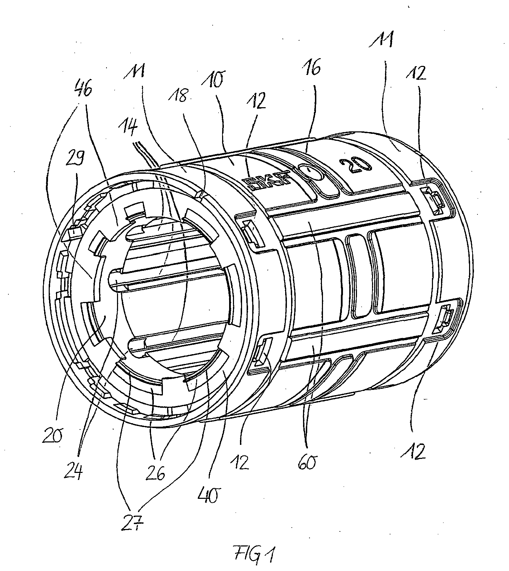

Die Figur 1 zeigt als ein Ausführungsbeispiel der Erfindung in perspektivischer Ansicht Elemente 10, 20 und 30 eines Linearkugellagers mit mehreren, zum endlosen Umlaufen vorgesehenen Kugelreihen. Durch die Höhlung des in der Figur 1 dargestellten Linearkugellagers ist eine Achse oder Welle zum Hindurchführen vorgesehen, so dass über die lasttragenden Kugeln und Laufbahneinlagen 60 das Linearkugellager gegenüber der Achse oder Welle wenigstens längsverschieblich ist. Lediglich aus Gründen der Übersichtlichkeit sind die Kugeln wie auch die Achse oder Welle nicht dargestellt.

Dabei umfasst das Linearkugellager ein hohlzylinderartiges Grundelement 10 mit im wesentlichen geradlinigen Führungen 14 für die belasteten und unbelasteten Kugeln sowie Aufnahmeöffnungen für Laufbahneinlagen 60, so dass die belasteten Kugeln einerseits auf der Achse oder Welle und andererseits auf den Laufbahneinlagen 60 abrollen. Dabei können wie in Figur 1 dargestellt, die Laufbahneinlagen 60 nach außen hin entsprechend einem Längsstreifen eines Zylindermantels ausgebildet sein, wobei in anderen Ausführungsformen auch Laufbahnelemente zum Einsatz kommen können, deren äußerer, mittlerer Bereich eine radial nach außen gerichtete Ausbauchung aufweist, wodurch mit dem Linearkugellager dann Fluchtungsfehler bis zu einem gewissen Grad ausgeglichen werden können. Dabei können aber mit Vorteil ein und dieselben Elemente 10, 20 und 30 sowohl für die winkeleinstellbare als auch für eine vergleichbare, nicht winkeleinstellbare Ausführung verwendet werden.

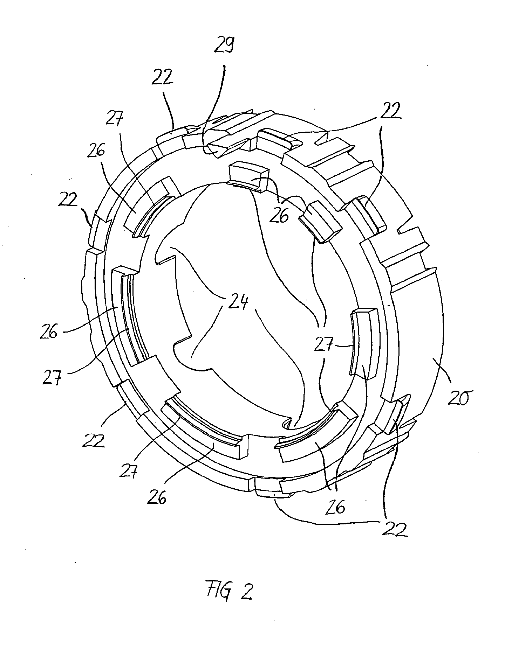

An beiden axialen Enden ist das Grundelement 10 gleichartig ausgebildet. Im folgenden wird die Beschaffenheit im Bereich der axialen Enden ausschließlich bezugnehmend auf das linke axiale Ende erläutert, wobei dies entsprechend natürlich auch für das andere axiale Ende gilt. Dabei ist besagtes axiales Ende des Grundelements 10 im Bereich des Außenmantels des Grundelements 10 mit einer derartigen axialen Auskragung 11 ausgebildet, dass in die Höhlung der Auskragung 11 ein Umlenkelement 20 und ein Deckelement 30 einschnappbar sind. In der Figur 1 ist das Umlenkelement 20 im eingeschnappten Zustand dargestellt. Die Figur 2 zeigt ebenfalls in perspektivischer Ansicht das Umlenkelement 20 in Alleinstellung.

Das Umlenkelement 20 umfasst dabei halbkreisartig ausgebildete Führungen 24 mittels derer die Kugeln zwischen den geradlinigen Führungen 14 im Grundelement 10 für die belasteten und unbelasteten Kugeln umgelenkt werden. Die Auskragung 11 ist für besagtes Einschnappen mit die Auskragung 11 radial durchdringenden Öffnungen 12 ausgebildet, in die entsprechende radiale Fortsätze 22 des Umlenkelements 20 zum Einschnappen vorgesehen sind. Dabei sind die Öffnungen 12 und die Fortsätze 22 derart aufeinander abgestimmt angeordnet und ausgebildet, dass das Grundelement 10 und das Umlenkelement 20 nur in einer vorgebbaren Verdrehposition miteinander verbindbar sind, so dass sich die Führungen 24 im Umlenkelement 20 passgenau an die des Grundelements 10 anschließen. Bei der Montage wird dabei das Umlenkelement 10 axial von links in die Auskragung 11 hineingedrückt und schnappt dann entsprechend ein.

Weiterhin ist das Umlenkelement 20 an der nach außen gerichteten Stirnseite in einem inneren Randbereich mit sektorartigen axialen Fortsätzen 26 ausgebildet, so dass zwischen den sektorartigen Fortsätzen 26 und diese gleichzeitig umschließend, ein ringartiger Schmierstoffspeicher 40 einsetzbar ist. Passgenau zwischen den sektorartigen Fortsätzen 26 des Umlenkelements 20 weist der Schmierstoffspeicher 40 zwischen den sektorartigen Fortsätzen 26 radial nach innen, hin zur Achse oder Welle auskragende Fortsätze 46 auf, die einem Schmieren der Achse oder Welle ausschließlich in denjenigen Bereichen dienen, auf denen die Kugeln zum Abrollen vorgesehen sind. Damit ist klar, dass auch die sektorartigen Fortsätze 26 am Umlenkelement 20 derart platziert sind, dass die radial nach innen hin auskragenden Fortsätze 46 des Schmierstoffspeichers 40 vorgenannter Bedingung genügen. Weiterhin sind die sektorartigen Fortsätze 26 am Umlenkelement 20 und die radialen Fortsätze 46 am Schmierstoffspeicher 40 derart aufeinander abgestimmt angeordnet und ausgebildet, dass eine bezüglich der gegenseitigen Verdrehposition richtige Montage sozusagen erzwungen wird.

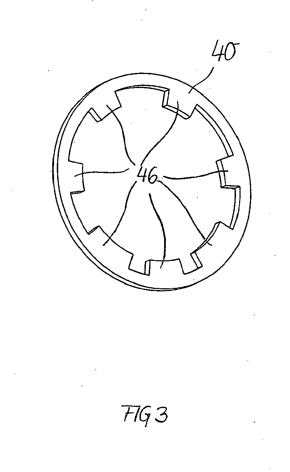

In der Figur 1 ist der Schmierstoffspeicher 40 in in das Umlenkelement 20 eingelegtem Zustand dargestellt, wohingegen er in Figur 3 nochmals in Alleinstellung perspektivisch dargestellt ist. Dabei kann der Schmierstoffspeicher 40 aus einem porösen Material, beispielsweise Schaumstoff, ausgebildet sein und als Schmierstoff ein Öl dienen, mit dem der Schaumstoff getränkt ist. Dadurch, dass ausschließlich Bereiche geschmiert werden, auf denen die Kugeln auf der Achse oder Welle abrollen, wird mit Vorteil die Gebrauchsdauer des einmal mit Schmierstoff gefüllten Schmierstoffspeichers 40 deutlich erhöht, bis hin zu einer Lebensdauerschmierung. In anderen Ausführungen kann aber auch eine Ausführung, bei der Öl in einer polymeren Matrix gehalten ist, was auch unter dem Stichwort "Solid Oil" bekannt ist, verwendet und/oder nachgeschmiert werden.

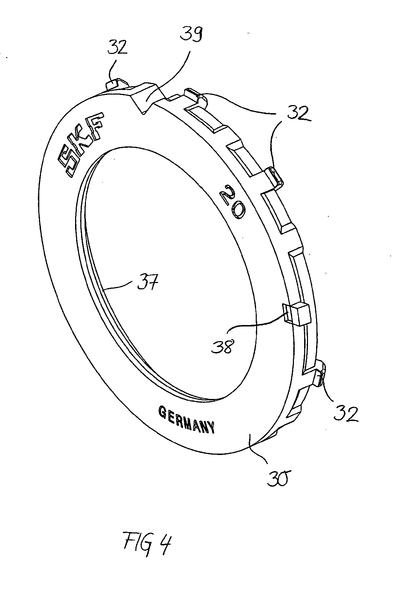

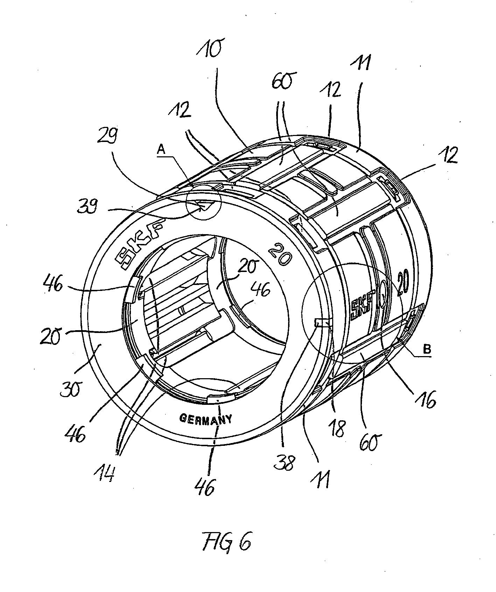

Abgeschlossen wird das in der Figur 1 dargestellte Linearkugellager schließlich dadurch, dass von der linken Seite her noch das in der Figur 4 dargestellte Deckelement 30 in die Auskragung 11 des Grundelements 10 eingeschnappt wird, so dass sich das Linearkugellager entsprechend Figur 6 ergibt. Dabei wird das Deckelement 30 in die gleichen Öffnungen 12 der Auskragung 11 eingeschnappt, wozu auch das Deckelement 30 entsprechend ausgebildete radiale Fortsätze 32 aufweist. Dabei sind natürlich auch die radialen Fortsätze 32 am Deckelement 30 und die Öffnungen 12 der Auskragung 11 derart aufeinander abgestimmt angeordnet und ausgebildet, dass eine bezüglich der gegenseitigen Verdrehposition richtige Montage sozusagen erzwungen wird.

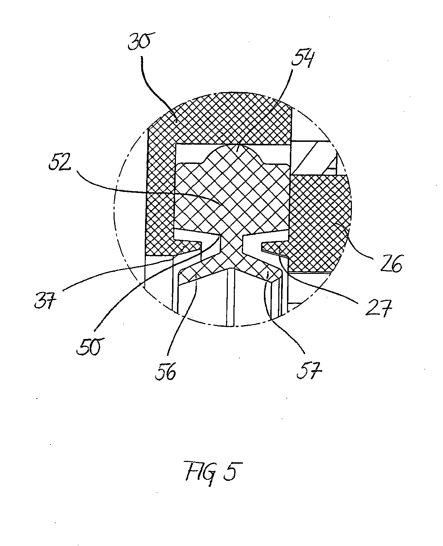

In der Figur 6 zwar nicht dargestellt, kann aber zwischen das Umlenkelement 20 und das Deckelement 30 gemäß Figur 5 auch eine Dichtung 50 mit angeordnet werden, die einem Abdichten des Linearkugellagers gegenüber der Achse oder Welle dient. Dabei zeigt die Figur 5 ausschnittsweise einen Längsschnitt der zwischen dem Umlenkelement 20 und dem Deckelement 30 angeordneten Dichtung 50. Die Dichtung 50 ist dabei als ein in sich geschlossener Ring ausgebildet. Die Dichtung 50 ist materialeinheitlich und einstückig aus einem Elastomermaterial hergestellt. Der Längsschnitt der Dichtung 50 weist dabei einen rechteckartigen Grundbereich 52 auf, an dem sich radial nach außen hin ein ringartig umlaufender Wulst 54 anschließt und an dessen Innenmantel sich eine schräg nach außen und eine schräg nach innen auskragende Dichtlippe 56 und 57 anschließen.

Weiterhin sind die sektorartigen axialen Fortsätze 26 des Umlenkelements 20 mit axial auskragenden Nasen 27 versehen, die zum Eingreifen zwischen besagtem rechteckförmigen Grundbereich 52 und der schräg nach innen hin weisenden Dichtlippe 57 vorgesehen sind. Ebenso ist das Deckelement 30 innenmantelseitig mit einer ringartig umlaufenden, axial nach innen hin auskragenden Nase 37 ausgebildet, die zum Eingreifen zwischen dem rechteckartigen Grundbereich 52 der Dichtung 50 und der schräg nach außen hin auskragenden Dichtlippe 56 der Dichtung 50 zum Eingriff vorgesehen ist. Damit wird mit besonderem Vorteil besagte Dichtung 50 sicher geführt, gehalten und zentriert. Durch die beiden Dichtlippen 56 und 57 und die Außengeometrie des Grundelements 10 wird dabei auch bei Fluchtungsfehlern zwischen dem Linearkugellager und der Achse oder Welle, also auch bei Winkelfehlern, eine gute Dichtwirkung erzielt, so dass Verschmutzungen vom Inneren des Linearkugellagers ferngehalten werden und ein vorhandener Schmierstoff im Inneren des Linearkugellagers gehalten wird.

Wie den Figuren 1 und 6 entnommen werden kann, ist das Grundelement 10 des Linearkugellagers weiterhin in einem Mittenbereich mit einer Vertiefung 16 ausgebildet, die einem axial- und verdrehgesicherten Befestigen gegenüber einer Einbauumgebung dient und gleichzeitig als Schmiernippel für ein Nachschmieren des Linearkugellagers genutzt werden kann. Gleichzeitig ist diese Umfangsstelle für das verdrehsichere Befestigen stirnseitig sowohl an der Stirnseite der Auskragung 11 des Grundelements 10 als auch am Deckelement 30 durch entsprechende Markierungen 18 und 38 gekennzeichnet, was die winkelpositionsrichtige Montage des Linearkugellagers erheblich vereinfacht. Dabei schließt sich an die als Vertiefung ausgebildete Markierung 38 am Deckelement 30 ein radialer Fortsatz an, der zum Eingreifen in die als Aussparung ausgebildete Markierung 18 an der Auskragung 11 entsprechend passgenau ausgebildet ist.

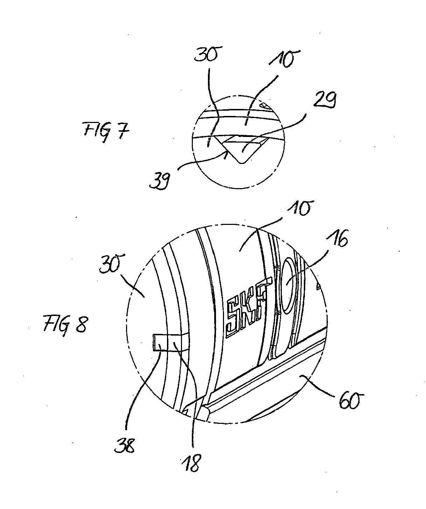

Weiterhin ist das Linearkugellager für eine vorgebbare, an einer bestimmten Umfangsstelle im wesentlichen senkrecht zum Zylindermantel stehende Hauptlastrichtung ausgebildet, die ebenfalls an der Stirnseite des Linearkugellagers durch eine Markierung gekennzeichnet ist. Dabei wird die Markierung durch einen axial vorstehenden Fortsatz 29 am Umlenkelement 20 realisiert, der in eine entsprechende Ausnehmung 39 des Deckelements 30 eingreift. Dabei sind insbesondere das Deckelement 30 und das Umlenkelement 20 unterschiedlich farbig ausgebildet, so dass die Markierung besonders gut erkennbar ist. Auch diese Markierung erleichtert dabei den bezüglich der Hauptlastrichtung richtigen Einbau des Linearkugellagers. Die Figuren 7 und 8 zeigen dabei noch einmal in der Figur 6 mit A und B bezeichnete Ausschnittsvergrößerungen der Stirnseite im Bereich der Markierungen 18 und 38.

Die Elemente 10, 20 und 30 sind insbesondere spritzgusstechnisch aus einem Kunststoff hergestellt. Dabei sind insbesondere das Umlenkelement 20 und das Deckelement 30 in axialer Richtung frei von Hinterschneidungen ausgebildet, was deren spritzgusstechnische Herstellung besonders einfach und damit kostengünstig ermöglicht. Aufwendige Schieber am Spritzgusswerkzeug sind damit mit Vorteil nicht erforderlich. Auch das Grundelement ist diesbezüglich mit besonderem Vorteil derart gestaltet, dass es innen ausschließlich axial entformbar ist und nur nach außen radial entformt werden muss. Damit kann ebenfalls ein einfach aufgebautes Spritzgusswerkzeug zum Einsatz kommen, was sich wiederum positiv auf die Kostenposition auswirkt. Besonders hervorzuheben ist dabei, dass die Herstellung mit besonderem Vorteil ohne eine Zwangsentformung auskommt.

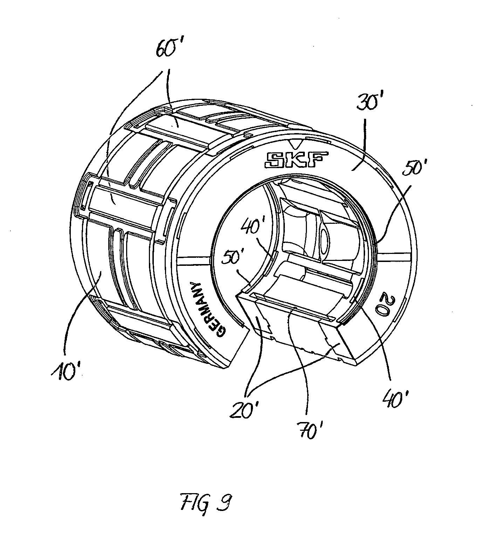

Die Figur 9 zeigt als ein weiteres Ausführungsbeispiel der Erfindung in perspektivischer Ansicht ein Linearkugellager, das anders als das Linearkugellager der Figuren 1 bis 8 in Umfangsrichtung nicht in sich hohlzylinderartig geschlossen ausgebildet ist, sondern der Hohlzylinder in einem sektorartigen Umfangsabschnitt mit einer Durchbrechung ausgebildet ist, die die volle Wandstärke und die gesamte Längsausdehnung des Linearkugellagers erfasst. Das Linearkugellager der Figur 9 ist dabei ähnlich dem Linearkugellager der Figuren 1 bis 8 aus den dort bezeichneten Elementen 10', 20' und 30' zusammengesetzt. Dabei umfassen das Grundelement 10' und die an beiden axialen Enden angeordneten Umlenkelemente 20' innenmantelseitig, beiderseits besagter Durchbrechung rillenartige Vertiefungen 70', in denen zum Abdichten gegenüber der Achse eine entsprechende Dichtung eingesetzt werden kann.

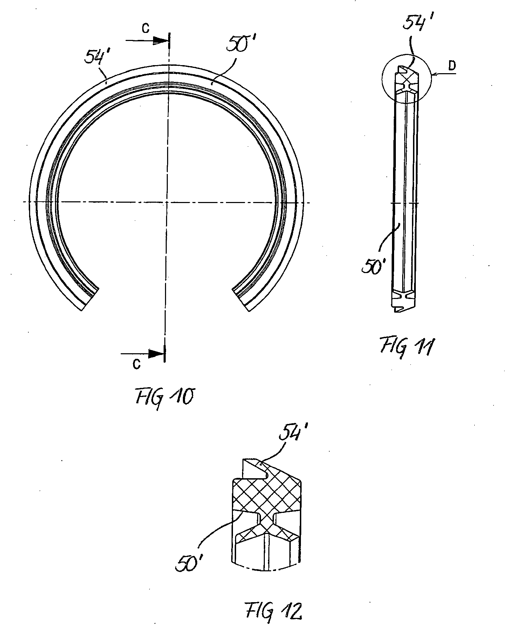

Weiterhin kann auch bei dem Linearkugellager der Figur 9 zwischen dem Umlenkelement 20' und dem Deckelement 30' eine Dichtung 50' eingesetzt sein, die sich von der Dichtung 50 gemäß der Figur 5 dadurch unterscheidet, dass die Dichtung 50' keinen in sich geschlossenen Ring ausbildet und dass auch außenmantelseitig anstelle des ringartig umlaufenden Wulstes 54 ein schräg nach außen auskragender Fortsatz 54' ausgebildet ist, was entsprechend in den Figuren 10 bis 12 dargestellt ist. Die Figur 10 zeigt dabei eine Frontansicht, die Figur 11 einen Längsschnitt entlang der Linie C-C der Figur 10 und die Figur 12 das in der Figur 10 mit D bezeichnete Detail der Dichtung 50'. Dabei bewirkt besagter schräg nach außen orientierter Fortsatz 54', dass die Dichtung 50' radial in Richtung zur Achse hin entsprechend angedrückt wird, so dass mit besonderem Vorteil dadurch eine besonders gute Dichtwirkung sichergestellt wird. Ansonsten gilt das vorausgehend zu den Figuren 1 bis 8 Beschriebene für die Figuren 9 bis 11 entsprechend, wobei bei den Figuren 9 bis 12 den Figuren 1 bis 8 entsprechende Bauelemente mit gleichen Bezugszeichennummern, ergänzt um einen Hochstrich, bezeichnet sind.

In anderen Ausführungen kann natürlich auch das Dichtungsdesign entsprechend den Figuren 10 bis 12 bei einem in Umfangsrichtung in sich geschlossenen ausgebildeten, hohlzylinderartigen Linearwälzlager angewandt sein und umgekehrt natürlich auch eine entsprechend der Figur 5 ausgebildete Dichtung bei einem in Umfangsrichtung in sich nicht geschlossen ausgebildeten Linearwälzlager zum Einsatz kommen.

### Bezugszeichenliste

- 10, 10': Grundelement
- 11: Auskragung
- 12: Öffnung
- 14: Führung
- 16: Vertiefung
- 18: Markierung

- 20, 20': Umlenkelement
- 22: radialer Fortsatz
- 24: Führung
- 26: axialer Fortsatz
- 27: Nase
- 29: Fortsatz

- 30, 30': Deckelement
- 32: radialer Fortsatz
- 37: Nase
- 38: Markierung
- 39: Ausnehmung

- 40, 40': Schmierstoffspeicher
- 46: Fortsatz

- 50, 50': Dichtung
- 52: rechteckförmiger Grundbereich
- 54: Wulst
- 54': Fortsatz
- 56, 57: Dichtlippe

- 60, 60': Laufbahneinlage

- 70': Vertiefung

## Patentansprüche

1. Linearwälzlager beinhaltend folgende Merkmale:
- Zwei, über wenigstens eine Wälzkörperreihe gegeneinander längsverschieblichen Teile,
- eines der Teile umfasst ein hohlzylinderartiges Grundelement (10, 10') mit geradlinien Führungen für die belasteten und unbelasteten, zum endlosen Umlauf vorgesehene Wälzkörper,
- das andere der Teile ist eine durch die Höhlung des Grundelements (10, 10') hindurchgeführte Welle oder Achse,
- ein Schmierstoffspeicher (40, 40') ist am Grundelement (10, 10') angeordnet und ist an der Umfangsposition, an der die Wälzkörperreihe zum Abrollen auf der Welle oder Achse vorgesehen ist, mit einem radial hin zur Welle oder Achse auskragenden, zum Berühren der Welle oder Achse vorgesehenen Fortsatz (46) ausgebildet,
**dadurch gekennzeichnet, dass**
der Außenmantel der Welle oder Achse wenigstens im vom Grundelement (10, 10') umschlossenen Bereich einem Kreiszylinder mantel entspricht.

2. Linearwälzlager nach Anspruch 1, wobei der Schmierstoffspeicher (40, 40') aus einem einen Schmierstoff aufnehmenden Material ausgebildet ist.

3. Linearwälzlager nach einem der Ansprüche 1 oder 2, wobei der Schmierstoff speicher (40, 40') aus einem porösen Material ausgebildet ist.

4. Linearwälzlager nach einem der Ansprüche 1 bis 3, wobei der Schmierstoff ein Öl oder Fett umfasst.

5. Linearwälzlager nach einem der Ansprüche 1 bis 4, wobei das Linearwälzlager folgende Merkmale beinhaltet:
- Wenigstens ein ringartiges Umlenkelement (20, 20') mit wenigstens einer Umlenkführung zwischen den geradlinigen Führungen,
- wenigstens ein ringartiges Deckelement (30, 30') und
- an wenigstens einem axialen Ende des Grundelements (10, 10') ist dieses im Bereich des Außenmantels mit einer derartigen axialen Auskragung (11) ausgebildet, dass in der Höhlung der Auskragung (11) nacheinander das Umlenkelement (20, 20') und das Deckelelement (30, 30') angeordnet sind.

6. Linearwälzlager nach Anspruch 5, wobei der Schmierstoffspeicher (40, 40') zwischen den Elementen (10, 10', 20, 20', 30, 30') angeordnet ist.

7. Linearwälzlager nach einem der Ansprüche 5 oder 6, wobei der Schmierstoffspeicher (40, 40') zwischen dem Umlenk- und dem Deckelement (20, 20', 30, 30') angeordnet ist.

8. Linearwälzlager nach einem der Ansprüche 5 bis 7, wobei der Schmierstoffspeicher (40, 40') an eine Stirnseite des Umlenkelements (20, 20') unmittelbar anschließend angeordnet und das Umlenkelement (30, 30') an der dem Schmierstoffspeicher (40, 40') zugewandten Stirnseite im Bereich des Innenmantels mit axial vorstehenden sektorartigen Fortsätzen (26) ausgebildet ist.

9. Linearwälzlager nach Anspruch 8, wobei der Schmierstoffspeicher (40, 40') die sektorartigen Fortsätze (26) des Umlenkelements (20, 20') ringartig umschließend und mit radialen nach innen vorstehenden Fortsätzen (46) ausgebildet ist, die zwischen den sektorartigen Fortsätzen (26) des Umlenkelements (20, 20') angeordnet sind.

10. Linearwälzlager nach Anspruch 9, wobei die Fortsätze (46) derart in Umfangsrichtung verteilt angeordnet und ausgebildet sind, dass lediglich ein Schmieren in Längsrichtung im Bereich der belasteten Wälzkörperreihen stattfindet.

11. Linearwälzlager nach einem der Ansprüche 8 oder 10, wobei die sektorartigen Fortsätze (26) des Umlenkelements (20, 20') und die radialen Fortsätze (46) des Schmierstoffspeichers (40, 40') derart ausgebildet und/oder in Umfangsrichtung verteilt angeordnet sind, dass der Schmierstoffspeicher (40, 40') ausschließlich in einer vorgebbaren Verdrehposition bezüglich dem Umlenkelement (20, 20') am Umlenkelement (20, 20') bestimmungsgemäß angeordnet ist.

12. Linearwälzlager nach einem der Ansprüche 5 bis 11, wobei die Auskragung (11), das Umlenkelement (20, 20') und das Deckelement (30, 30') derart ausgebildet sind, dass die Elemente (20, 20', 30, 30') in die Auskragung (11) einschnappbar sind.

13. Linearwälzlager nach einem der Ansprüche 5 bis 12, wobei wenigstens eines der Elemente (10, 10', 20, 20', 30, 30') aus Kunststoff ausgebildet ist.

14. Linearwälzlager nach einem der Ansprüche 5 bis 13, wobei das Umlenkelement (20, 20') und das Deckelelement (30, 30') in axialer Richtung frei von Hinterschneidungen ausgebildet sind.

15. Linearwälzlager nach einem der Ansprüche 5 bis 14, wobei wenigstens eines der Elemente (10, 10', 20, 20', 30, 30') durch ein Spritzgießen hergestellt ist.

16. Linearwälzlager nach einem der Ansprüche 1 bis 15, wobei die Wälzkörper als Kugeln ausgebildet sind.

17. Linearwälzlager nach einem der Ansprüche 1 bis 16, wobei die Elemente (10, 20, 30) und/oder der Schmierstoffspeicher (40) in Umfangsrichtung in sich geschlossen ausgebildet sind.

18. Linearwälzlager nach einem der Ansprüche 1 bis 16, wobei die Elemente (10', 20', 30') und/oder der Schmierstoffspeicher (40') in einem übereinstimmenden, sektorartigen Umfangsabschnitt mit einer Durchbrechung ausgebildet sind, die die volle Wandstärke und die gesamte Längsausdehnung erfasst.

19. Linearwälzlager nach einem der Ansprüche 1 bis 18, wobei der Schmierstoff speicher (40, 40') aus einem Schaumstoff ausgebildet ist.

## Claims

1. Linear anti-friction bearing containing the following features:
- two parts which can be displaced longitudinally with respect to one another via at least one rolling-body row,
- one of the parts comprises a hollow-cylindrical basic element (10, 10') with rectilinear guides for the loaded and unloaded rolling bodies which are provided for endless circulation,
- the other of the parts is a shaft or axle which is guided through the cavity of the basic element (10, 10'), and
- a lubricant store (40, 40') is arranged on the basic element (10, 10') and, at the circumferential position at which the rolling-body row is provided for rolling on the shaft or axle, is configured with a projection (46) which projects radially towards the shaft or axle and is provided for making contact with the shaft or axle,
**characterized in that**
the outer casing of the shaft or axle corresponds to a circular-cylindrical casing at least in the region which is enclosed by the basic element (10, 10').

2. Linear anti-friction bearing according to Claim 1, the lubricant store (40, 40') being configured from a material which absorbs a lubricant.

3. Linear anti-friction bearing according to either of Claims 1 and 2, the lubricant store (40, 40') being configured from a porous material.

4. Linear anti-friction bearing according to one of Claims 1 to 3, the lubricant comprising an oil or grease.

5. Linear anti-friction bearing according to one of Claims 1 to 4, the linear anti-friction bearing containing the following features:
- at least one ring-like deflecting element (20, 20') with at least one deflecting guide between the rectilinear guides,
- at least one ring-like covering element (30, 30'), and
- at at least one axial end of the basic element (10, 10'), the latter is configured in the region of the outer shell with an axial bulge (11) which is such that the deflecting element (20, 20') and the covering element (30, 30') are arranged one after another in the cavity of the bulge (11).

6. Linear anti-friction bearing according to Claim 5, the lubricant store (40, 40') being arranged between the elements (10, 10', 20, 20', 30, 30').

7. Linear anti-friction bearing according to either of Claims 5 and 6, the lubricant store (40, 40') being arranged between the deflecting element and the covering element (20, 20', 30, 30').

8. Linear anti-friction bearing according to one of Claims 5 to 7, the lubricant store (40, 40') being arranged such that it is immediately adjacent to an end side of the deflecting element (20, 20'), and, on the end side which faces the lubricant store (40, 40'), the deflecting element (30, 30') being configured in the region of the inner shell with axially protruding sector-like projections (26).

9. Linear anti-friction bearing according to Claim 8, the lubricant store (40, 40') being configured so as to enclose the sector-like projections (26) of the deflecting element (20, 20') in a ring-like manner and with radial inwardly protruding projections (46) which are arranged between the sector-like projections (26) of the deflecting element (20, 20').

10. Linear anti-friction bearing according to Claim 9, the projections (46) being configured and arranged distributed in the circumferential direction in such a way that merely lubrication takes place in the longitudinal direction in the region of the loaded rolling-body rows.

11. Linear anti-friction bearing according to either of Claims 8 and 10, the sector-like projections (26) of the deflecting element (20, 20') and the radial projections (46) of the lubricant store (40, 40') being configured and/or being arranged distributed in the circumferential direction in such a way that the lubricant store (40, 40') is arranged as intended on the deflecting element (20, 20') exclusively in a predefinable rotational position with regard to the deflecting element (20, 20').

12. Linear anti-friction bearing according to one of Claims 5 to 11, the bulge (11), the deflecting element (20, 20') and the covering element (30, 30') being configured in such a way that the elements (20, 20', 30, 30') can be snapped into the bulge (11).

13. Linear anti-friction bearing according to one of Claims 5 to 12, at least one of the elements (10, 10', 20, 20', 30, 30') being configured from plastic.

14. Linear anti-friction bearing according to one of Claims 5 to 13, the deflecting element (20, 20') and the covering element (30, 30') being configured such that they are free of undercuts in the axial direction.

15. Linear anti-friction bearing according to one of Claims 5 to 14, at least one of the elements (10, 10', 20, 20', 30, 30') being produced by way of an injection-moulding process.

16. Linear anti-friction bearing according to one of Claims 1 to 15, the rolling bodies being configured as balls.

17. Linear anti-friction bearing according to one of Claims 1 to 16, the elements (10, 20, 30) and/or the lubricant store (40) being configured so as to be closed in themselves/itself in the circumferential direction.

18. Linear anti-friction bearing according to one of Claims 1 to 16, the elements (10', 20', 30') and/or the lubricant store (40') being configured in a coinciding, sector-like circumferential section with an aperture which covers the full wall thickness and the entire longitudinal extent.

19. Linear anti-friction bearing according to one of Claims 1 to 18, the lubricant store (40, 40') being configured from a foam.

## Revendications

1. Palier à roulement linéaire comprenant les caractéristiques suivantes :
- deux pièces déplaçables longitudinalement l'une par rapport à l'autre par le biais d'au moins une rangée de corps de roulement,
- l'une des pièces comprend un élément de base de type cylindrique creux (10, 10') avec des guides essentiellement linéaires pour les corps de roulement prévus pour circuler sans fin, sollicités et non sollicités,
- l'autre pièce est un arbre ou un axe guidé à travers la cavité de l'élément de base (10, 10'), et
- un dispositif de stockage de lubrifiant (40, 40') est disposé sur l'élément de base (10, 10') et est réalisé avec une saillie (46) saillant radialement vers l'arbre ou l'axe, prévue pour venir en contact avec l'arbre ou l'axe,
**caractérisé en ce que** l'enveloppe extérieure de l'arbre ou axe correspond au moins dans la région entourée par l'élément de base (10, 10') à une enveloppe cylindrique circulaire.

2. Palier à roulement linéaire selon la revendication 1, dans lequel le dispositif de stockage de lubrifiant (40, 40') est réalisé en un matériau recevant un lubrifiant.

3. Palier à roulement linéaire selon l'une quelconque des revendications 1 ou 2, dans lequel le dispositif de stockage de lubrifiant (40, 40') est réalisé en un matériau poreux.

4. Palier à roulement linéaire selon l'une quelconque des revendications 1 à 3, dans lequel le lubrifiant comprend une huile ou une graisse.

5. Palier à roulement linéaire selon l'une quelconque des revendications 1 à 4, le palier à roulement linéaire contenant les caractéristiques suivantes :
- au moins un élément déflecteur annulaire (20, 20') avec au moins un guide déflecteur entre les guides linéaires,
- au moins un élément de recouvrement annulaire (30, 30') et
- à au moins une extrémité axiale de l'élément de base (10, 10'), celui-ci est réalisé dans la région de l'enveloppe extérieure avec une partie saillante axiale (11) telle que l'élément déflecteur (20, 20') et l'élément de recouvrement (30, 30') soient disposés l'un derrière l'autre dans la cavité de la partie saillante (11).

6. Palier à roulement linéaire selon la revendication 5, dans lequel entre les éléments (10, 10', 20, 20', 30, 30') est disposé un dispositif de stockage de lubrifiant (40, 40').

7. Palier à roulement linéaire selon l'une quelconque des revendications 5 ou 6, dans lequel, entre l'élément déflecteur et l'élément de recouvrement (20, 20', 30, 30'), est disposé le dispositif de stockage de lubrifiant (40, 40').

8. Palier à roulement linéaire selon l'une quelconque des revendications 5 à 7, dans lequel le dispositif de stockage de lubrifiant (40, 40') est disposé de manière à se raccorder directement à un côté frontal de l'élément déflecteur (20, 20') et l'élément déflecteur (30, 30') est réalisé au niveau du côté frontal tourné vers le dispositif de stockage de lubrifiant (40, 40') dans la région de l'enveloppe interne avec des saillies (26) saillant axialement en forme de secteurs.

9. Palier à roulement linéaire selon la revendication 8, dans lequel le dispositif de stockage de lubrifiant (40, 40') est réalisé de manière à entourer sous forme annulaire les saillies (26) en forme de secteurs de l'élément déflecteur (20, 20') et avec des saillies radiales (46) saillant vers l'intérieur qui sont disposées entre les saillies (26) en forme de secteurs de l'élément déflecteur (20, 20').

10. Palier à roulement linéaire selon la revendication 9, dans lequel les saillies (46) sont disposées de manière répartie dans la direction périphérique et sont réalisées de telle sorte qu'une lubrification n'ait lieu que dans la direction longitudinale dans la région des rangées de corps de roulement sollicités.

11. Palier à roulement linéaire selon l'une quelconque des revendications 8 ou 10, dans lequel les saillies (26) en forme de secteurs de l'élément déflecteur (20, 20') et les saillies radiales (46) du dispositif de stockage de lubrifiant (40, 40') sont réalisées et/ou sont disposées de manière répartie dans la direction périphérique de telle sorte que le dispositif de stockage de lubrifiant (40, 40') soit disposé sur l'élément déflecteur (20, 20') de manière conforme aux exigences exclusivement dans une position de rotation prédéfinissable par rapport à l'élément déflecteur (20, 20').

12. Palier à roulement linéaire selon l'une quelconque des revendications 5 à 11,
la partie saillante (11), l'élément déflecteur (20, 20') et l'élément de recouvrement (30, 30') étant réalisés de telle sorte que les éléments (20, 20', 30, 30') puissent être encliquetés dans la partie saillante (11).

13. Palier à roulement linéaire selon l'une quelconque des revendications 5 à 12, dans lequel au moins un des éléments (10, 10', 20, 20', 30, 30') est réalisé en plastique.

14. Palier à roulement linéaire selon l'une quelconque des revendications 5 à 13, dans lequel l'élément déflecteur (20, 20') et l'élément de recouvrement (30, 30') sont réalisés dans la direction axiale de manière exempte de contre-dépouilles.

15. Palier à roulement linéaire selon l'une quelconque des revendications 5 à 14, dans lequel au moins l'un des éléments (10, 10', 20, 20', 30, 30') est fabriqué par moulage par injection.

16. Palier à roulement linéaire selon l'une quelconque des revendications 1 à 15, dans lequel les corps de roulement sont réalisés sous forme de billes.

17. Palier à roulement linéaire selon l'une quelconque des revendications 1 à 16, dans lequel les éléments (10, 20, 30) et/ou le dispositif de stockage de lubrifiant (40) sont réalisés de manière fermée en soi dans la direction périphérique.

18. Palier à roulement linéaire selon l'une quelconque des revendications 1 à 16, dans lequel les éléments (10', 20', 30') et/ou le dispositif de stockage de lubrifiant (40') sont réalisés dans une portion périphérique coïncidente, en forme de secteur, avec un orifice qui couvre toute l'épaisseur de paroi et toute l'étendue longitudinale.

19. Palier à roulement linéaire selon l'une quelconque des revendications 1 à 18, dans lequel le dispositif de stockage de lubrifiant (40, 40') est réalisé en une mousse.
